# EUROPÄISCHE PATENTSCHRIFT

(11) **EP 0 382 087 B1**
(45) Veröffentlichungstag und Bekanntmachung des Hinweises auf die Patenterteilung: **25.05.1994**
(21) Anmeldenummer: 90101973.7
(22) Anmeldetag: 01.02.1990
(51) Int. Cl.: B60R 9/06, B60R 9/10

(54) **Wohnmobil, Kleinbus, Wohnwagen od. dgl. Fahrzeug**
Mobile home, minibus, caravan or similar vehicle
Camping-car, microbus, caravane ou véhicule similaire

(30) Priorität: 10.02.1989 DE 3903940
(43) Veröffentlichungstag der Anmeldung: 16.08.1990
(73) Patentinhaber: Gebr. Happich GmbH, D-42097 Wuppertal (DE)
(72) Erfinder: Berg, Ernst Wilhelm, D-5600 Wuppertal 2 (DE)

(56) Entgegenhaltungen:
- CH-A- 258 744
- DE-A- 3 235 248
- FR-A- 844 348
- GB-A- 2 079 699

## Beschreibung

Die Erfindung bezieht sich auf ein Wohnmobil, Kleinbus, Wohnwagen od. dgl. Fahrzeug mit einer Heckwand, an der ein Lastenträger befestigt ist, der zwei Grundbügel aufweist, die sich in vertikaler Ausrichtung mit Abstand parallel nebeneinander sowie mit Abstand parallel zur Heckwand erstrecken, mit ihren zur Heckwand hin abgebogenen Enden am Heckbereich des Fahrzeugs abstützbar und festlegbar sind, und die miteinander verbunden sind, und zwar durch einen daran angelenkten, horizontal ausgerichteten Schwenkrahmen mit daran lösbar befestigten Halterungen für zumindest zwei Fahrräder, der sich in ausgeschwenkter Lage an den Grundbügeln abstützt und durch einen oberhalb des Schwenkrahmens an den Grundbügeln angeordneten, parallel zum Schwenkrahmen ausgerichteten Verbindungsbügel.

Die DE-A-3 235 248 zeigt ein Wohnmobil der gattungsgemäßen Art mit einer Heckwand, an der ein Lastenträger befestigt ist. Der Lastenträger ist als Heckgepäckträger für Fahrräder ausgebildet und kann wahlweise an der Oberseite oder Unterseite der Heckwand eines Wohnmobils angeordnet werden.

Der Erfindung liegt gegenüber dem aufgezeigten Stand der Technik die Aufgabe zugrunde, ein Fahrzeug der eingangs genannten Art mit einer Heckwand, an der ein Lastenträger befestigt ist, zur Verfügung zu stellen, bei dem sich der Lastenträger durch eine einfache und kostengünstige Herstellbarkeit, ein besonders gutes Aussehen und, bei geringem Eigenplatzbedarf, durch eine besonders hohe Lastenaufnahmekapazität auszeichnen soll.

Zur Lösung dieser Aufgabe ist erfindungsgemäß vorgesehen, daß die oberen abgebogenen Enden der Grundbügel etwa in Dachhöhe und die unteren abgebogenen Enden der Grundbügel etwa in Bodenhöhe des Fahrzeugs befestigt sind, daß die Grundbügel in etwa mittiger Anordnung Anschraubwinkel als zusätzliche Bestigungsmittel tragen, daß die Grundbügel durch einen zweiten Schwenkrahmen und durch einen zweiten Verbindungsbügel miteinander verbunden sind, daß die Verbindungsbügel starr an den Grundbügeln angeordnet sind und daß die Anordnung der Schwenkrahmen und der Verbindungsbügel so getroffen ist, daß sich jeweils ein erster Schwenkrahmen und ein erster Verbindungsbügel an der Unterseite und ein zweiter Schwenkrahmen und ein zweiter Verbindungsbügel an der Oberseite der Heckwand des Fahrzeugs befinden, so daß der Lastenträger nebeneinander und übereinander angeordnete Fahrräder zu tragen vermag.

Der an der Heckwand des Fahrzeugs angeordnete Lastenträger besteht aus nur wenigen, einfach und kostengünstig herzustellenden und zusammenzusetzenden Einzelteilen, besitzt ein ansprechendes Aussehen und, bei nur geringem Überstand über die Fahrzeugheckwand hinaus, insbesondere auch eine sehr hohe Lastenaufnahmekapazität, weil die Lasten erfindungsgemäß nunmehr auf zwei Ebenen untergebracht werden können. Die Unterbringung auf zwei Ebenen ist besonders vorteilhaft, wenn der Lastenträger zum Transport von Fahrrädern, dem bevorzugten Anwendungsfall dienen soll, weil dadurch die Fahrräder einer ganzen Familie problemlos verstaut und transportiert werden können. Während mit herkömmlichen Lastenträgern zwei bis drei Fahrräder transportiert werden konnten, ermöglicht die vorliegende Erfindung den problemlosen Transport von vier bis sechs Fahrrädern, was also eine Verdopplung der Aufnahme- und Transportkapazität bedeutet und Kundenwünschen sehr entgegenkommt. Dabei ergibt sich dadurch, daß die Grundbügel in etwa mittiger Anordnung Anschraubwinkel als zusätzliche Befestigungsmittel tragen, eine erhöhte Stabilität des Lastenträgers.

Zur einfachen und kostengünstigen Herstellbarkeit und zum guten Aussehen des Lastenträgers trägt es bei, wenn in Ausgestaltung der Erfindung vorgesehen wird, daß jeder Grundbügel einstückig aus einem Rohr mit rundem, ovalen oder eckigen Querschnitt gebildet ist.

Gemäß einer weiteren Ausgestaltung der Erfindung kann vorgesehen sein, daß die Grundbügel mit ihren unteren, zur Heckwand hin abgebogenen Enden in an der Heckwand befestigte Aufnahmeösen einsteckbar sind und mit ihren oberen, ebenfalls zur Heckwand hin abgebogenen Enden wahlweise an der Fahrzeugkarosserie oder an einer auf dem Fahrzeugdach angeordneten Dachgalerie befestigbar sind. Diese Maßnahme ermöglicht eine überaus einfache und leichte Montage ohne Hilfspersonen.

Weiterhin kann vorgesehen sein, daß die Grundbügel, die Schwenkrahmen und die Verbindungsbügel des Lastenträgers aus Metall, vorzugsweise Leichtmetall bestehen.

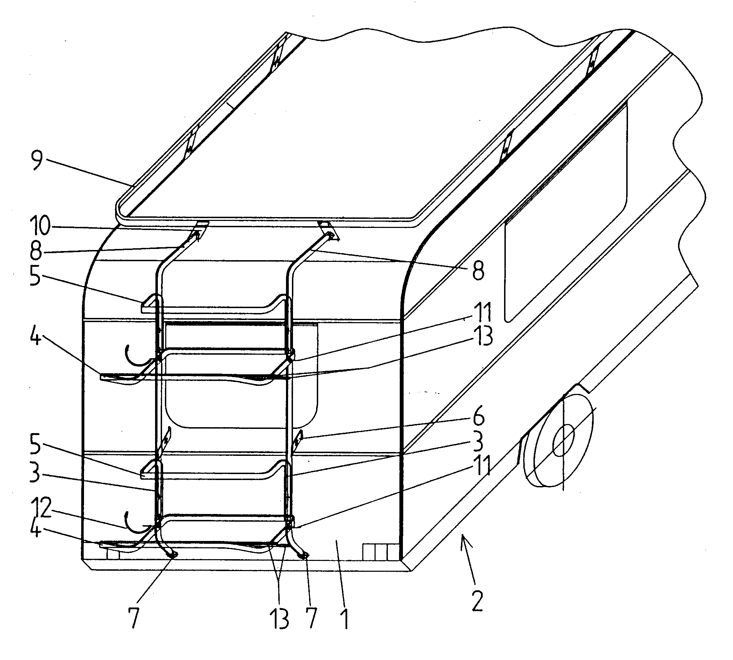

Ein Ausführungsbeispiel der Erfindung wird anhand der Zeichnung näher erläutert, wobei die Zeichnung ein Montagebeispiel des Lastenträgers an der Heckwand eines hier als Wohnmobil dargestellten Fahrzeugs zeigt.

An der Heckwand 1 des Fahrzeugs 2 ist der Lastenträger befestigt. Der Lastenträger besteht im wesentlichen aus zwei Grundbügeln 3, zwei Schwenkrahmen 4, zwei Verbindungsbügeln 5 und ggf. aus zwei Anschraubwinkeln 6.

Die Grundbügel 3, die am Heckbereich des Fahrzeugs abstützbar und festlegbar sind, erstrecken sich mit Abstand parallel nebeneinander und sind mit ihren zur Heckwand 1 hin abgebogenen Enden 7 und 8 im Bereich des Fahrzeughecks einerseits etwa in Dachhöhe und andererseits etwa in Bodenhöhe des Fahrzeugs, wie dargestellt, befestigt. Jeder Grundbügel ist aus einem, vorzugsweise aus Leichtmetall bestehenden Rohr mit rundem, ovalen oder eckigen Querschnitt einstückig gebildet. Die unteren Enden 7 der Grundbügel 3 greifen in nicht näher dargestellte Aufnahmeösen, die an der Heckwand 1 befestigt sind, ein und sind in diesen Ösen z.B. durch einen Splint gesichert. Die oberen Enden 8 der Grundbügel 3 sind wahlweise an der Fahrzeugkarosserie oder an einer auf dem Fahrzeugdach angeordneten Dachgalerie 9 oder deren Befestigungsböckchen 10 in ebenfalls nicht näher dargestellter Weise befestigt. In ihrem mittleren Bereich tragen die Grundbügel 3 Anschraubwinkel 6 als zusätzliche Abstütz- und Befestigungsmittel.

Die beiden Schwenkrahmen 4 sind in sich geschlossen ausgebildet, über die Grundbügel 3 geschoben und an diesen mittels Gelenkstiften 11, beispielsweise Nieten befestigt. Der jeweils hintere Bereich der Schwenkrahmen 4 ist nach oben hin abgewinkelt und vermag sich mit seinem hinteren Rahmenschenkel an den Grundbügeln 3 abzustützen, wenn sich die Schwenkrahmen 4 - wie dargestellt - in ihrer ausgeschwenkten Lage befinden. Zusätzlich oder alternativ können an den Schwenkrahmen 4 auch Anschlagelemente angeordnet sein, die sich in ausgeschwenkter Lage der Schwenkrahmen an der Vorderseite der Grundbügel 3 abstützen. Bei Nichtgebrauch können die Schwenkrahmen 4 in Pfeilrichtung 12 nach oben geschwenkt und in dieser Lage durch Lederriemen od. dgl. an den Verbindungsbügeln 5 festgelegt werden. Der von den Grundbügeln 3 nach vorne abstehende Bereich jedes Schwenkrahmens 4 ist mit daran befestigbaren Trageschienen 13 ausrüstbar. Die zweckmäßigerweise aus Leichtmetall bestehenden Tragschienen 13 weisen einen U-förmigen Querschnitt auf. In die nach oben hin offenen Tragschienen können die Vorder- und Hinterreifen von nicht dargestellten Fahrrädern eingesetzt und dann mittels die Felgen der Fahrradreifen durchgreifender Lederriemen od. dgl. gesichert werden. Die oberseitige Sicherung der Fahrräder erfolgt, wiederum mittels Lederriemen od. dgl. an den Verbindungsbügeln 5.

Sämtliche Einzelteile des Lastenträgers sind durch Schraub- oder Nietverbindungen aneinander festgelegt.

Zur wesentlichen Erhöhung der Lastenträgerstabilität sind Verstärkungsprofile, die als gerippte Rohre ausgebildet sein können, (nicht gezeigt) im Bereich der als Abstützung vorgesehenen Biegungen der Schwenkrahmen 4 sowie im Bereich der Gelenkbohrungen eingearbeitet.

## Patentansprüche

1. Wohnmobil, Kleinbus, Wohnwagen od. dgl. Fahrzeug (2) mit einer Heckwand (1), an der ein Lastenträger befestigt ist, der zwei Grundbügel (3) aufweist, die sich in vertikaler Ausrichtung mit Abstand parallel nebeneinander sowie mit Abstand parallel zur Heckwand (1) erstrecken, mit ihren zur Heckwand (1) hin abgebogenen Enden (7, 8) am Heckbereich des Fahrzeugs (2) abstützbar und festlegbar sind, und die miteinander verbunden sind, und zwar durch einen daran angelenkten, horizontal ausgerichteten Schwenkrahmen (4) mit daran lösbar befestigten Halterungen (13) für zumindest zwei Fahrräder, der sich in ausgeschwenkter Lage an den Grundbügeln (3) abstützt und durch einen oberhalb des Schwenkrahmens (4) an den Grundbügeln (3) angeordneten, parallel zum Schwenkrahmen (4) ausgerichteten Verbindungsbügel (5), dadurch gekennzeichnet, daß die oberen abgebogenen Enden (8) der Grundbügel (3) etwa in Dachhöhe und die unteren abgebogenen Enden der Grundbügel (3) etwa in Bodenhöhe des Fahrzeugs (2) befestigt sind, daß die Grundbügel (3) in etwa mittiger Anordnung Anschraubwinkel (6) als zusätzliche Befestigungsmittel tragen, daß die Grundbügel (3) durch einen zweiten Schwenkrahmen (4) und durch einen zweiten Verbindungsbügel (5) miteinander verbunden sind, daß die Verbindungsbügel (5) starr an den Grundbügeln (3) angeordnet sind und daß die Anordnung der Schwenkrahmen (4) und der Verbindungsbügel (5) so getroffen ist, daß sich jeweils ein erster Schwenkrahmen (4) und ein erster Verbindungbügel (5) an der Unterseite und ein zweiter Schwenkrahmen (4) und ein zweiter Verbindungsbügel (5) an der Oberseite der Heckwand (1) des Fahrzeugs (2) befinden, so daß der Lastenträger nebeneinander und übereinander angeordnete Fahrräder zu tragen vermag.

2. Wohnmobil od. dgl. nach Anspruch 1, dadurch gekennzeichnet, daß jeder Grundbügel (3) einstückig aus einem Rohr mit rundem, ovalen oder eckigem Querschnitt gebildet ist.

3. Wohnmobil od. dgl. nach einem oder mehreren der Ansprüche 1 oder 2, dadurch gekennzeichnet, daß die Grundbügel (3) mit ihren unteren, zur Heckwand hin abgebogenen Enden (7) in an der Heckwand (1) befestigte Aufnahmeösen einsteckbar sind und mit ihren oberen, ebenfalls zur Heckwand hin abgebogenen Enden (8) wahlweise an der Fahrzeugkarosserie oder an einer auf dem Fahrzeugdach angeordneten Dachgalerie (9, 10) befestigbar sind.

4. Wohnmobil oder dergleichen nach einem oder mehreren der Ansprüche 1 bis 3, dadurch gekennzeichnet, daß zumindest der Schwenkrahmen (4) im Bereich der als Abstützung vorgesehenen Biegungen sowie im Bereich der Gelenkbohrungen eingearbeitete Verstärkungsprofile aufweist.

## Claims

1. Camping van, minibus, caravan or similar vehicle (2) with a rear wall (1) on which there is fastened a load carrier having two basic brackets (3) which, in vertical alignment, extend at a distance from, and parallel to, each other and at a distance from, and parallel to, the rear wall (1), which can be supported and fixed, by means of their ends (7, 8) bent off towards the rear wall (1), on the rear region of the vehicle (2) and which are connected to each other, to be precise by a horizontally aligned pivot frame (4) which is articulated thereon, has securing means (13), releasably fastened on the frame and intended for at least two bicycles, and is supported, in the pivoted-out position, on the basic brackets (3), and by a connecting bracket (5) which is arranged, above the pivot frame (4), on the basic brackets (3) and is aligned parallel to the pivot frame (4), characterized in that the upper bent-off ends (8) of the basic brackets (3) are fastened approximately at roof level, and the lower bent-off ends of the basic brackets (3) are fastened approximately at floor level, of the vehicle (2), in that the basic brackets (3) bear, in an approximately central arrangement, screw-on angles (6) as additional fastening means, in that the basic brackets (3) are connected to each other by a second pivot frame (4) and by a second connecting bracket (5), in that the connecting brackets (5) are arranged rigidly on the basic brackets (3), and in that the arrangement of the pivot frames (4) and of the connecting brackets (5) is such that there are located in each case a first pivot frame (4) and a first connecting bracket (5) on the lower side, and a second pivot frame (4) and a second connecting bracket (5) on the upper side, of the rear wall (1) of the vehicle (2), with the result that the load carrier can carry bicycles arranged one next to the other and one above the other.

2. Camping van or the like according to Claim 1, characterized in that each basic bracket (3) is formed in one piece from a tube of round, oval or polygonal cross-section.

3. Camping van or the like according to one or both of Claims 1 and 2, characterized in that the basic brackets (3) can be plugged, by means of their lower ends (7) bent off towards the rear wall, into receiving eyelets fastened on the rear wall (1) and can optionally be fastened, by means of their upper ends (8) likewise bent off towards the rear wall, on the vehicle bodywork or on a roof rail (9, 10) arranged on the vehicle roof.

4. Camping van or the like according to one or more of Claims 1 to 3, characterized in that at least the pivot frame (4) has reinforcing profiles incorporated in the region of the bends, provided as supporting means, and in the region of the articulation bores.

## Revendications

1. Auto-caravane, minibus, caravane ou véhicule analogue (2), comprenant une paroi arrière (1) à laquelle est fixé un support de charge qui comprend deux étriers de base (3) qui s'étendent parallèlement en direction verticale et à distance l'un de l'autre ainsi que parallèlement à la paroi arrière (1) et à distance de celle-ci, dont les extrémités (7, 8) coudées en direction de la paroi arrière (1) peuvent s'appuyer et être fixées sur la région arrière du véhicule (2), et qui sont reliés l'un à l'autre par un châssis pivotant (4) orienté horizontalement et articulé sur eux, comprenant des supports (13) fixés de façon amovible et destinés à au moins deux bicyclettes, châssis qui s'appuie dans la position pivotée vers l'extérieur sur les étriers de base (3), et par un étrier de liaison (5) disposé au-dessus du châssis pivotant (4) sur les étriers de base (3) et orienté parallèlement au châssis pivotant (4), caractérisée en ce que les extrémités coudées supérieures (8) des étriers de base (3) sont fixées sensiblement à la hauteur du toit et les extrémité coudées inférieures des étriers de base (3) sont fixées sensiblement à la hauteur du plancher du véhicule (2), en ce que les étriers de base (3) comprennent en tant que moyens additionnels de fixation des cornières vissables (6) prévues sensiblement dans leur partie centrale, en ce que les étriers de base (3) sont reliés l'un à l'autre par un second châssis pivotant (4) et par un second étrier de liaison (5), en ce que les étriers de liaison (5) sont montés rigidement sur les étriers de base (3) et en ce que l'agencement des châssis pivotants (4) et des étriers de liaison (5) est constitué de manière que respectivement un premier châssis pivotant (4) et un premier étrier de liaison (5) soient situés sur le côté inférieur et qu'un second châssis pivotant (4) et un second étrier de liaison (5) soient situés sur le côté supérieur de la paroi arrière (1) de manière que le support de charge puisse supporter des bicyclettes disposées les unes contre les autres et au-dessus des autres.

2. Auto-caravane ou analogue selon la revendication 1, caractérisée en ce que chaque étrier de base (3) est constitué d'un seul tenant par un tube de section ronde, ovale ou polygonale.

3. Auto-caravane selon l'une ou plusieurs des revendications 1 ou 2, caractérisée en ce que les étriers de base (3) peuvent être enfoncés par leurs extrémités inférieures (7) coudées en direction de la paroi arrière dans des oeillets de réception fixés sur la paroi arrière (1), et peuvent être fixés par leurs extrémités supérieures (8) qui sont également coudées en direction de la paroi arrière soit à la paroi arrière du véhicule soit à une galerie (9, 10) montée sur le toit du véhicule.

4. Auto-caravane selon l'une ou plusieurs des revendications 1 à 3, caractérisé en ce que le châssis pivotant (4) au moins comprend des profilés de renforcement prévus en tant qu'appuis et constitués dans la région des coudes ainsi que dans la région des alésages d'articulation.
